# EUROPEAN PATENT APPLICATION

(11) **EP 2 899 703 A1**
(43) Date of publication of application: **29.07.2015**
(21) Application number: 15150660.7
(22) Date of filing: 09.01.2015
(51) Int. Cl.: G07G 1/00, G06F 11/30, G07G 1/12, G07F 9/02, G06Q 20/20

(54) **Service data record system and POS system with the same**

(30) Priority: 26.01.2014 CN 201420050648 U; 26.01.2014 CN 201420049436 U
(71) Applicant: Flytech Technology Co., Ltd, Taipei City 114 (TW)
(72) Inventor: Lam, Tai-Seng, Taipei City (TW); Lee, Hsiao-Hui, 242 New Taipei City (TW); Tsai, Shuei-Jin, 242 New Taipei City (TW)
(74) Representative: Zeitler Volpert Kandlbinder Patent- und Rechtsanwälte Partnerschaft mbB

(57) **Abstract**

A service data record system and a POS system with the service data record system are provided. The service data record system is used to display a data of an electronic device. The electronic device includes at least one electronic unit and a power unit. The service data record system includes a power device, a terminal display, a remote monitoring interface and a micro processing unit. By the micro processing unit, the electronic data set of the electronic unit may be displayed on the terminal display or transmitted to a remote monitoring device. Moreover, the pre-designate event of the electronic device may be displayed on the terminal display. According to the pre-designate event, it is convenient for a service engineer to conduct breakdown maintenance of the electronic device.

## Description

### FIELD OF THE INVENTION

The present invention relates to a service data record system, and more particularly relates to a service data record system for an electronic device and a POS system with the service data record system.

### BACKGROUND OF THE INVENTION

A point of sale device, also referred as a point of service device or a POS device, is a widely used electronic device in retail industry nowadays, and is mainly used for managing products and the customer information. Generally, the POS device is usually installed on a cashier desk in a convenience store, a shop or a supermarket for displaying the information and the sum of price of merchandise purchased by consumers. Consequently, it is convenient for a cashier to operate the counting task and avoid errors that may be generated in the checkout process.

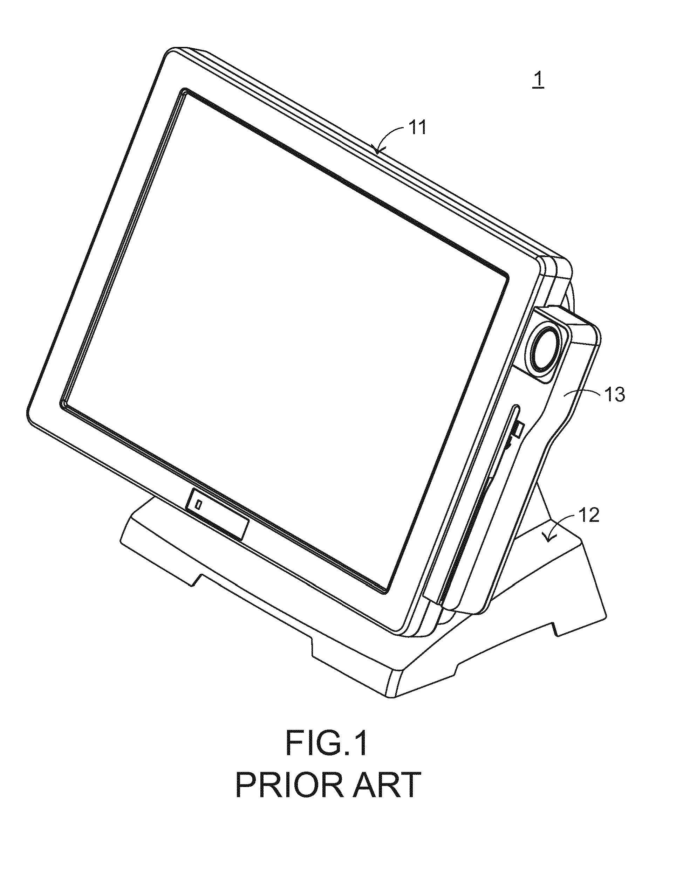

Please refer to FIG. 1, which is a schematic perspective view of a conventional POS device. The POS device 1 comprises a screen body 11, a bracket base 12 and a host computer (not shown). The host computer is disposed within the screen body 11, and composed of a mother board, a hard disk, a memory or other components. The host computer is used for executing various calculations and saving the merchandise information (e.g. the amount of merchandise, the price of merchandise, the stock of merchandise, the gross profit or the like). In addition, the cashier can watch the merchandise information which is displayed on the screen.

Furthermore, with ceaselessly change of the consumer demand, the additional functions provided by the POS device 1 are increasing. Consequently, the number of components inside the POS device 1 or the number of peripheral devices of the POS device 1 gradually increases. For example, a magnetic stripe reader device 13 is located at a lateral side of the screen body for charging a card. However, it leads to some difficulties during the repair process. For example, if the POS device is abnormal or unable to be booted while being used, it is hard for a user or a service engineer to readily identify the failed component(s) among the large amount of components. Therefore, the service engineer has no choice but to disassemble the POS device 1 and check components one by one to find out the failed component(s). Actually, it takes much time for trouble shooting.

Furthermore, when the service engineer analyzes the POS device 1, it is hard for the service engineer to accurately find out the reason why the component fails only according to the factory data such as the model type, the specification, the manufactured date, etc. On the contrary, if the service engineer can further get more information about the failed component (e.g. the usage time, the use frequency and the failure rate, etc.), the device engineer can conduct the reliability analysis more effectively.

Hereinafter, some patents relevant to trouble shooting cases will be described. For example, a failure detection device is disclosed in Taiwan Utility Model Patent Number 291039. This failure detection device is installed in an electronic device having a basic input/output system (BIOS). During a hardware inspecting process by the BIOS, associated codes are transmitted to a display module and displayed on the display module. For example, the display module is a seven-segment display or a LED display. Since different codes are relevant to different hardware components, the user or the service engineer can recognize the failed hardware component according to the codes displayed on the display module. However, the failure detection device disclosed in this patent still has some drawbacks as follows.

Firstly, the BIOS is only suitable for detecting the failed hardware component related to the motherboard. Whereas, the breakdown status of the display, the hard disk or the peripheral device and the usage information cannot be obtained through the BIOS. Secondly, if the electronic device is abnormal, the user or the service engineer can only realize which hardware component fails but cannot realize the information about the failed hardware component (e.g. the usage time, the use frequency or the failure rate) through the display module. Under this circumstance, the service engineer cannot effectively repair the failed hardware component, but may only repair the electronic device by replacing the failed hardware component with a new one. Thirdly, if the breakdown of the electronic device is very serious, the power unit of the electronic device cannot successfully provide electricity, or the electronic device crashes and fails to be booted. In case that the electronic device crashes and fails to be booted, the result of detecting the electronic device by the BIOS cannot be displayed on the display module. Under this circumstance, the service engineer has to disassemble the whole electronic device to detect the hardware components one by one, and then the failed hardware component can be repaired.

Furthermore, a computer system as shown in FIG. 2 is disclosed in Chinese Publication Number CN102023917A. In the computer system 2, an embedded controller 202 is connected to plural electronic modules. The electronic modules include a dynamic random access memory (DRAM) module 22, a frequency generator 23, a BIOS 24, an input/output (I/O) control chip 25 and a central processing unit (CPU) 26. While the computer system 2 is booted, the embedded controller 202 may write the collected information S22-S26 of the plural electronic modules into a memory module 200. Consequently, the service engineer may analyze the reason why the computer system 2 is abnormal by referring to the information in the memory module 200. Moreover, if the embedded controller is separated from the computer system 2 and installed in a monitoring device, the embedded controller may sift out the collected information S22-S26 of the electronic modules in advance, and then write the sifted information S202 into the memory module. Moreover, if the computer system 2 is abnormal, a warning message is generated to warn the user of the computer system 2. For example, a warning window is shown or a warning sound is generated.

However, the computer system 2 disclosed in this patent still has some drawbacks. For example, the user of the computer system 2 and the service engineer can only realize the breakdown status of the computer system according to warning message displayed on the warning window of the computer system 2. For realizing which electronic module fails or realizing the detailed usage information of the failed electronic module, the user or the service engineer has to further read out the contents stored in the memory module 200. If the breakdown of the computer system 2 is very serious, the power unit of the computer system 2 cannot successfully provide electricity, or the computer system 2 crashes and fails to be booted. Under this circumstance, the contents stored in the memory module 200 cannot be read out through the hardware components of the computer system 2. Moreover, since most users (e.g. the users in the terminal side) are usually not capable of removing the memory module 200 from the computer system 2 and reading the contents of the memory module 200 with another reading device, the failure condition cannot be eliminated by the simple troubleshooting procedure. Moreover, the service engineer who is not located beside the computer system 2 cannot clearly realize the possible problem of the computer system 2 through the interpretation of the user. In other words, the service engineer cannot make any preparation before repair or maintenance of the computer system 2.

As mentioned above, the current troubleshooting technology still needs to be improved. Moreover, the data record product for the POS device has not been introduced into the market. Therefore, the above issues should be addressed.

### SUMMARY OF THE INVENTION

The present invention provides a service data record system for an electronic device and a POS system with the service data record system. By the service data record system, the pre-designate event of the electronic device can be displayed on a display device of the service data record system. According to the pre-designate event displayed on the display device, it is convenient for a service engineer to conduct breakdown maintenance.

One objective of this invention is to provide a service data record system for use with an electronic device. The electronic device includes at least one electronic unit and a power unit for supplying electricity to the electronic device. The service data record system includes a power device, a terminal display, a remote monitoring interface and a micro processing unit. The micro processing unit is electrically connected with the electronic device, the terminal display, the remote monitoring interface and the power device, and receives the electricity from at least one of the power unit and the power device. By the micro processing unit, at least a partial data of an electronic data set of the at least one electronic unit is displayed on the terminal display, and/or the at least partial data of the electronic data set is externally transmitted to a remote monitoring device, and/or a control command from the remote monitoring device is inputted into the service data record system.

In one embodiment, the terminal display includes at least one selected from a group consisting of a liquid crystal module (LCM), a vacuum fluorescent display (VFD) and a light emitting device (LED) display device; and/or the power device includes at least one selected from a group consisting of a mains power supply, a dry battery, a storage-battery, a lithium battery, a solar battery and a bio battery; and/or the electronic device is a point of sale (POS) device; and/or each of the at least partial data of the electronic data set is a pre-designated event data.

In one embodiment, the at least one electronic unit includes at least one selected from a group consisting of a central processing unit, a mother board, a function board, a daughter board, a memory, a display, a hard disk, a CD-ROM, an adapter, a scanner, a thermal print device, a USB device, a power supply, a touch sensor, a magnetic stripe reader, a fingerprint recognition device, an information button (iButton), a radio frequency identification device, a card reader and an input device; and/or the at least partial data of the electronic data set contains at least one selected from a group consisting of a use frequency of the at least one electronic unit, a usage time period of the at least one electronic unit, a manufacture data of the at least one electronic unit, a firmware data of the at least one electronic unit, an unusual data of the at least one electronic unit, a repair data of the at least one electronic unit, a power-on data of the electronic device, a power-off data of the electronic device and a sleep data of the electronic device.

In one embodiment, when the electronic device is in a normal working state, the power unit supplies the electricity to the service data record system, wherein when the electronic device is abnormal, the power device supplies the electricity to the service data record system. Alternatively, the electronic device further includes a display unit, wherein when the electronic device is in the normal working state, the at least partial data of the electronic data set is displayed on the display unit, wherein when the electronic device is abnormal, the at least partial data of the electronic data set is displayed on the terminal display.

In one embodiment, the electronic device further includes a control unit, which is electrically connected with the at least one electronic unit and receives the electronic data set from the at least one electronic unit. The service data record system further includes a storage unit. The micro processing unit is electrically connected with the control unit and the storage unit. The control unit sifts out the at least partial data from the electronic data set and transmits the at least partial data to the micro processing unit. The micro processing unit receives the at least partial data of the electronic data set and transmits an entire of the at least partial data to the storage unit and/or the terminal display and/or the remote monitoring interface. Alternatively, the electronic device further includes a storage unit electrically connected with the control unit, and the electronic data set from the control unit is received by and stored in the storage unit. The micro processing unit is electrically connected with the control unit and the storage unit. The micro processing unit receives and sifts out the electronic data set from the control unit, so that the at least partial data of the electronic data set is transmitted to the terminal display and/or the remote monitoring interface, and/or the micro processing unit sifts out the electronic data set from the storage unit, so that the at least partial data of the electronic data set is transmitted to the terminal display and/or the remote monitoring interface. Alternatively, the electronic device further includes a storage unit electrically connected with the control unit. The control unit sifts out the at least partial data from the electronic data set and allows the at least partial data to be transmitted to and stored in the storage unit, and/or the control unit transmits the at least partial data of the electronic data set to the micro processing unit. The micro processing unit receives the at least partial data from the control unit, so that the entire of the at least partial data is transmitted to the terminal display and/or the remote monitoring interface, and/or the micro processing unit retrieves the at least partial data from the storage unit, so that the entire of the at least partial data of the electronic data set is transmitted to the terminal display and/or the remote monitoring interface.

In one embodiment, the control unit is an embedded controller; and/or the storage unit is an electrically erasable programmable read-only memory (EEPROM).

In one embodiment, the micro processing unit allows a power device data of the power device to be transmitted to and stored in the storage unit; and/or the terminal display is connected with the micro processing unit, and the micro processing unit allows a terminal display data of the terminal display to be transmitted to and stored in the storage unit.

In one embodiment, the remote monitoring interface includes at least one I/O connection part and/or a network connection part.

In one embodiment, the at least one I/O connection part includes at least one selected from a group consisting of a USB port, a COM port, an inter-integrated circuit (I²C) port, a 3G port, a 4G port, a Bluetooth port and a WiFi port; and/or the electronic device further has a network connection unit, wherein when the electronic device is in a normal working state, the at least partial data of the electronic data set is externally transmitted to the remote monitoring device through the network connection unit, and/or the control command from the remote monitoring device is inputted into the service data record system through the network connection unit, wherein when the electronic device is abnormal, the at least partial data of the electronic data set is externally transmitted to the remote monitoring device through the network connection part, and/or the control command from the remote monitoring device is inputted into the service data record system through the network connection part.

Another objective of this invention is to provide a POS system. The POS system includes a display unit, a host and peripheral device and a service data record system. A merchandise information is displayed on the display unit. The host and peripheral device includes at least one electronic unit and a power unit. The power unit supplies electricity to the host and peripheral device. The service data record system includes a power device, a terminal display, a remote monitoring interface and a micro processing unit. The micro processing unit is electrically connected with the power device, the terminal display, the remote monitoring interface and the host and peripheral device, and receives the electricity from at least one of the power unit and the power device. By the micro processing unit, at least a partial data of an electronic data set of the at least one electronic unit is displayed on the terminal display, and/or the at least partial data of the electronic data set is externally transmitted to a remote monitoring device, and/or a control command from the remote monitoring device is inputted into the service data record system.

In one embodiment, the terminal display includes at least one selected from a group consisting of a liquid crystal module (LCM), a vacuum fluorescent display (VFD) and a light emitting device (LED) display device; and/or the power device includes at least one selected from a group consisting of a mains power supply, a dry battery, a storage-battery, a lithium battery, a solar battery and a bio battery; and/or each of the at least partial data of the electronic data set is a pre-designated event data.

In one embodiment, the at least one electronic unit includes at least one selected from a group consisting of a central processing unit, a mother board, a function board, a daughter board, a memory, a display, a hard disk, a CD-ROM, an adapter, a scanner, a thermal print device, a USB device, a power supply, a touch sensor, a magnetic stripe reader, a fingerprint recognition device, an information button (iButton), a radio frequency identification device, a card reader and an input device; and/or the at least partial data of the electronic data set contains at least one selected from a group consisting of a use frequency of the at least one electronic unit, a usage time period of the at least one electronic unit, a manufacture data of the at least one electronic unit, a firmware data of the at least one electronic unit, an unusual data of the at least one electronic unit, a repair data of the at least one electronic unit, a power-on data of the host and peripheral device, a power-off data of the host and peripheral device and a sleep data of the host and peripheral device.

In one embodiment, when the host and peripheral device is in a normal working state, the power unit supplies the electricity to the service data record system, wherein when the host and peripheral device is abnormal, the power device supplies the electricity to the service data record system. Alternatively, when the host and peripheral device is in the normal working state, the at least partial data of the electronic data set is displayed on the display unit, wherein when the host and peripheral device is abnormal, the at least partial data of the electronic data set is displayed on the terminal display.

In one embodiment, the host and peripheral device further includes a control unit, which is electrically connected with the at least one electronic unit and the display unit and receives the electronic data set from at least one of the electronic unit and the display unit. The service data record system further includes a storage unit. The micro processing unit is electrically connected with the control unit and the storage unit. The control unit sifts out the at least partial data from the electronic data set and transmits the at least partial data to the micro processing unit. The micro processing unit receives the at least partial data of the electronic data set and transmits an entire of the at least partial data to the storage unit and/or the terminal display and/or the remote monitoring interface. Alternatively, the service data record system further includes a storage unit electrically connected with the control unit, and the electronic data set from the control unit is received by and stored in the storage unit. The micro processing unit is electrically connected with the control unit and the storage unit. The micro processing unit receives and sifts out the electronic data set from the control unit such that the at least partial data of the electronic data set is transmitted to the terminal display and/or the remote monitoring interface, and/or the micro processing unit sifts out the electronic data set from the storage unit such that the at least partial data of the electronic data set is transmitted to the terminal display and/or the remote monitoring interface. Alternatively, the service data record system further includes a storage unit electrically connected with the control unit. The control unit sifts out the at least partial data from the electronic data set and allows the at least partial data to be transmitted to and stored in the storage unit, and/or the control unit transmits the at least partial data of the electronic data set to the micro processing unit. The micro processing unit receives the at least partial data from the control unit, so that the entire of the at least partial data is transmitted to the terminal display and/or the remote monitoring interface, and/or the micro processing unit retrieves the at least partial data from the storage unit, so that the entire of at least partial data of the electronic data set is transmitted to the terminal display and/or the remote monitoring interface.

In one embodiment, the control unit is an embedded controller; and/or the storage unit is an electrically erasable programmable read-only memory (EEPROM).

In one embodiment, the micro processing unit allows a power device data of the power device to be transmitted to and stored in the storage unit; and/or the terminal display is connected with the micro processing unit, and the micro processing unit allows a terminal display data of the terminal display to be transmitted to and stored in the storage unit.

In one embodiment, the remote monitoring interface includes at least one I/O connection part and/or a network connection part.

In one embodiment, the at least one I/O connection part includes at least one selected from a group consisting of a USB port, a COM port, an inter-integrated circuit (I²C) port, a 3G port, a 4G port, a Bluetooth port and a WiFi port; and/or the host and peripheral device further has a network connection unit, wherein when the host and peripheral device is in a normal working state, the at least partial data of the electronic data set is externally transmitted to the remote monitoring device through the network connection unit, and/or the control command from the remote monitoring device is inputted into the service data record system through the network connection unit, wherein when the host and peripheral device is abnormal, the at least partial data of the electronic data set is externally transmitted to the remote monitoring device through the network connection part, and/or the control command from the remote monitoring device is inputted into the service data record system through the network connection part.

### BRIEF DESCRIPTION OF THE DRAWINGS

FIG. 1 is a schematic perspective view of a conventional POS device;

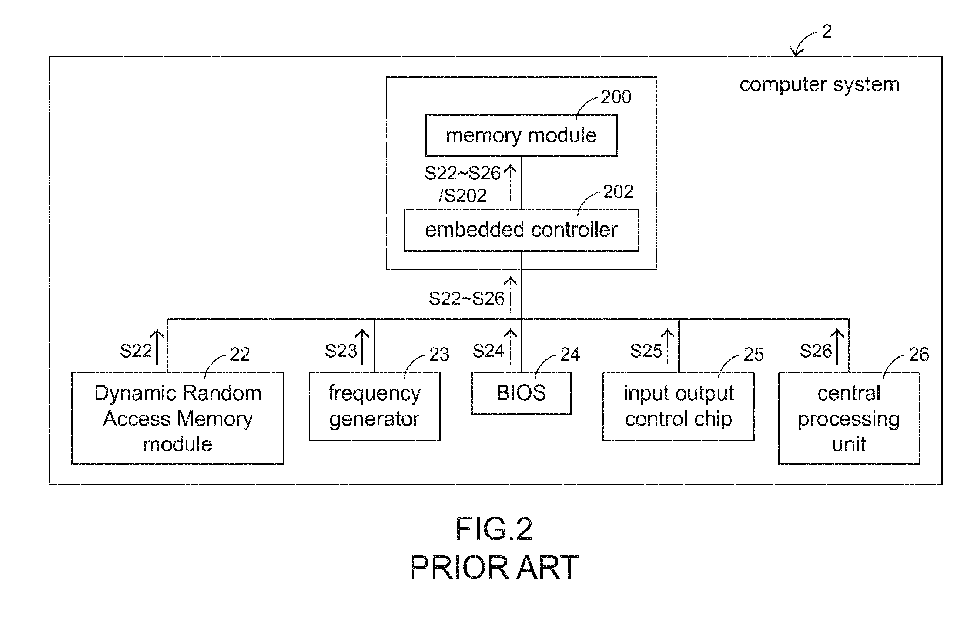

FIG. 2 is a block diagram illustrating a computer system disclosed in Chinese Publication Number 102023917;
FIG. 3 is a schematic block diagram illustrating a POS system according to a first embodiment of the present invention;
FIG. 4 is a schematic block diagram illustrating a POS system according to a second embodiment of the present invention;
FIG. 5 is a schematic block diagram illustrating a POS system according to a third embodiment of the present invention;
FIG. 6 is a schematic block diagram illustrating a POS system according to a fourth embodiment of the present invention;
FIG. 7 is a schematic block diagram illustrating a POS system according to a fifth embodiment of the present invention;
FIG. 8 is a schematic block diagram illustrating a POS system according to a sixth embodiment of the present invention;
FIG. 9 is a schematic block diagram illustrating a POS system according to a seventh embodiment of the present invention; and
FIG. 10 is a schematic block diagram illustrating a POS system according to an eighth embodiment of the present invention.

### DETAILED DESCRIPTION OF THE PREFERRED EMBODIMENT

The present invention provides a service data record system (also referred as a SDR system). The service data record system may be applied to various kinds of electronic devices. The service data record system may be used for displaying various designated event data of the electronic device at the user side (i.e. terminal) in order to allow a user to conduct routine maintenance or allow a service engineer to conduct breakdown maintenance and reliability analysis. The details of the designated event data will be illustrated later. In the following embodiments, a POS device will be illustrated as the example of the electronic device. It is noted that the type of the electronic device may be varied according to practical requirements.

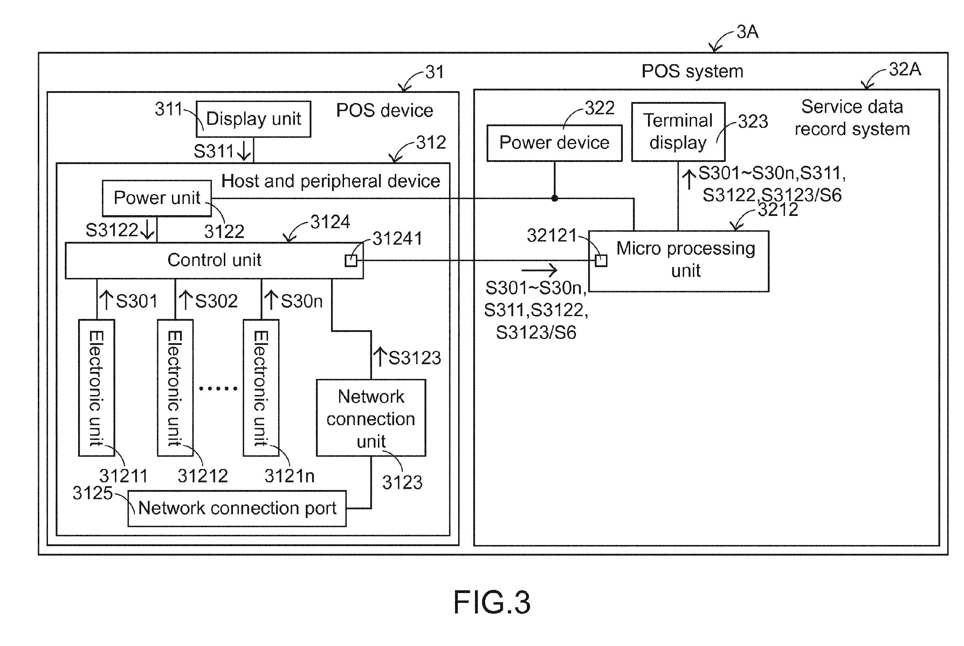

FIG. 3 is a schematic block diagram illustrating a POS system according to a first embodiment of the present invention. As shown in FIG. 3, the POS system 3A comprises a POS device 31 and a service data record system 32A. The POS device 31 comprises a display unit 311 and a host and peripheral device 312. The host and peripheral device 312 comprises plural electronic units 31211~3121n, a power unit 3122, a network connection unit 3123 and a control unit 3124. The power unit 3122 is used to supply electricity to the POS device 31 in operation. Moreover, each of the electronic units 31211~3121n provides a specified function. For example, the specified function may be executed to calculate and store the merchandise information such as the quantity, the price, the stock, the gross profit and etc. Moreover, the cashier can watch the merchandise information displayed on the display unit 311.

In this embodiment, these electronic units 31211~3121n include a central processing unit (CPU), a mother board, a function board, a daughter board, a memory (such as a flash memory, a read-only memory, or a random access memory), a display, a hard disk (such as a conventional disk or a solid-state disk), a CD-ROM, an adapter, a scanner, a thermal print device, a USB device, a power supply, a touch sensor, a magnetic stripe reader, a fingerprint recognition device, an information button (iButton), a radio frequency identification device, a card reader and/or an input device (such as a keyboard or a mouse). The functions and the working principles of the above hardware components are familiar to those skilled in the art, so it will not be redundantly described herein. It is noted that the electronic elements 31211~3121n included in the host and the peripheral device 312 are not limited to the above elements.

Furthermore, the control unit 3124 is electrically connected with the power unit 3122, the network connection unit 3123, the display unit 311 and at least one of the electronic units 31211~3121n. The control unit 3124 may control the signal timing of each hardware component so as to manage the entire POS device 31. For example, the control unit 3124 is responsible for the keyboard control and the standby and sleep control of the POS device 31. In this embodiment, the control unit 3124 is an embedded controller. Generally, the embedded controller has been widely used in many electronic devices as an important signal processing element. The principles of the embedded controller are well known to those skilled in the art, and are not redundantly described herein.

The service data record system of the present invention will be illustrated as follows. The service data record system 32A comprises a micro processing unit 3212, a terminal display 323 and a power device 322. The terminal display 323 is connected with the micro processing unit 3212. The power device 322 is also connected with the micro processing unit 3212. Moreover, the micro processing unit 3212 has a first micro processing unit connection part 32121. The control unit 3124 has a first control connection part 31241. The first micro processing unit connection part 32121 of the micro processing unit 3212 is connected with the first control connection part 31241 of the control unit 3124.

Since the control unit 3124 is electrically connected to the power unit 3122, the network connection unit 3123, the display unit 311 and the electronic units 31211~3121n and is responsible for processing the signal of each hardware component, the control unit 3124 may receive the electronic data sets S301~S30n, S311, S3122 and S3123 from the electronic units 31211~3121n, the display unit 311, the power unit 3122 and the network connection 3123. Moreover, the entire of the electronic data sets S301~S30n, S311, S3122 and S3123 or a partial data S6 of the electronic data sets S301~S30n, S311, S3122 and S3123 may be transmitted from the control unit 3124 to the micro processing unit 3212. Furthermore, the micro processing unit 3212 may transmit the entire of the data S301~S30n, S311, S3122 and S3123/S6 to the terminal display 323, or select the partial data S6 of the received electronic data sets S301~S30n, S311, S3122 and S3123 and transmit the partial data S6 to the terminal display 323. Consequent, the at least partial data of the electronic data sets S301~S30n, S311, S3122 and S3123 can be displayed on the terminal display 323.

An example of the terminal display 323 includes but is not limited to a liquid crystal module (LCM), a vacuum fluorescent display (VFD) or a light emitting device (LED) display device. In this embodiment, the electronic data displayed on the terminal display 323 are relevant to the hardware components which are connected to the control unit 3124. For example, these electronic data contain the use frequency (e.g. the accumulated touch times of a touch sensor), the usage time period (e.g. the accumulated power-on time period of the display unit 311), the manufacture information (e.g. the manufacture date), the firmware information (e.g. the firmware version, the number of times of updating the firmware, and the time point for updating the firmware), the unusual information (e.g. the exception code of the BIOS), and the repair information (e.g. the repair time point and the repair frequency), etc. Alternatively, the pre-designated event data for the POS device 31 may contain the power-on data (e.g. the accumulated power-on time period, the accumulated booting number and the power-on triggering manner), the power-off data (e.g. the accumulated number of shutdown times and the power-off triggering manner) and the sleep data (e.g. the accumulated number of sleep times and sleep-triggering manner). It is noted that the electronic data displayed on the terminal display 323 are not restricted to the above data. The electronic data may be varied by those skilled in the art according to the practical requirements.

Consequently, if the POS device 31 is abnormal, the terminal user (e.g. a cashier) may make simple repair according to the contents displayed on the terminal display 323, or the terminal user may report the contents displayed on the terminal display 323 to the service engineer at the remote side (e.g. the service engineer who is not near the terminal display 323) in order to assist the service engineer in making the preparation before repair or maintenance. Moreover, according to the contents displayed on the terminal display 323, the service engineer at the remote side may construct the terminal user how to make repair or maintenance.

The power device 322 is used for providing electricity to the service data record system 32A. An example of the power device 322 includes but is not limited to a mains power supply, a dry battery, a storage battery, a lithium battery, a solar battery or a bio battery. When the POS device 31 is in a normal working sate (e.g. in a power-on state), the power unit 3122 of the POS device 31 provides electricity to the entire POS system 3A. Accordingly, the micro processing unit 3212 of the service data record system 32A uses the electricity which is supplied by the power unit 3122. In case the POS device 31 is abnormal, or the POS device 31 may have a crash to result in the power unit 3122 out of work, the power device 322 of the service data record system 32A provides backup electricity to the whole service data record system 32A. Consequently, even if the POS device 31 has an unexpected crash, the electronic data can still be displayed on the terminal display 323.

Consequently, regardless of whether the POS device 31 can be booted or not, the service engineer is able to conduct the breakdown maintenance and the reliability analysis according to the contents displayed on the terminal display 323.

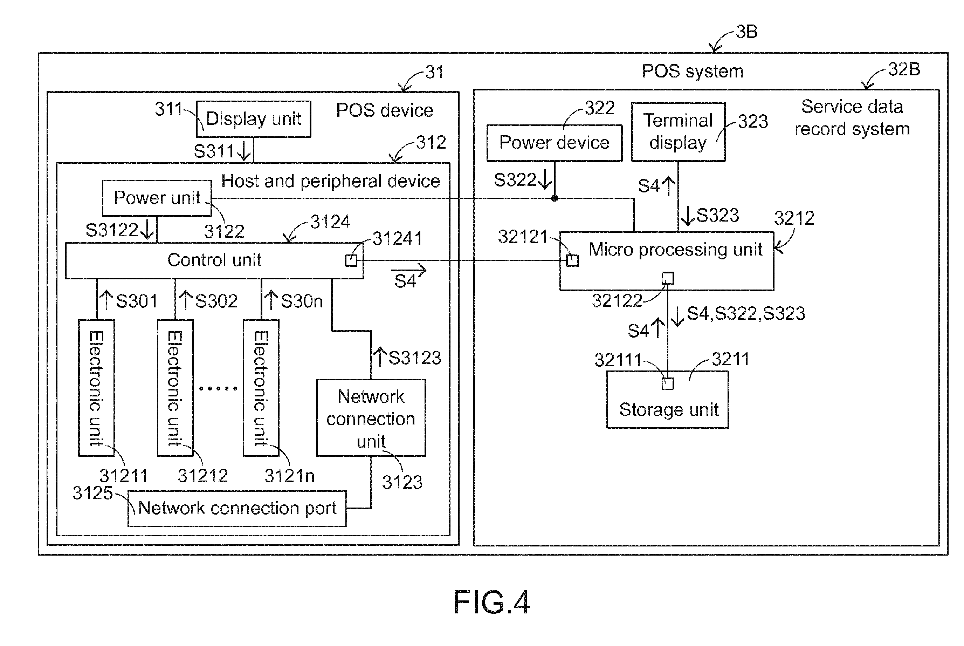

FIG. 4 is a schematic block diagram illustrating a POS system according to a second embodiment of the present invention. The components of the POS system 3B that are similar to those of first embodiment are designated by identical numeral references, and the detailed descriptions thereof are omitted. In comparison with the first embodiment, the service data record system 32B of the POS system 3B of this embodiment further comprises a storage unit 3211. The storage unit 3211 has a first storage connection part 32111. In addition, the micro processing unit 3212 further has a second micro processing unit connection part 32122. The second micro processing unit connection part 32122 of the micro processing unit 3212 is connected to the first storage connection part 32111 of the storage unit 3211. In this embodiment, the storage unit 3211 is, but not limited to be, an electrically erasable programmable read-only memory (EEPROM).

In this embodiment, the control unit 3124 may firstly sift out the desired electronic data S4 from the received electronic data sets S301~S30n, S311, S3122 and S3123. Moreover, the control unit 3124 may sift out the desired electronic data S4 by judging whether the electronic date comply with the pre-designated event data. The micro processing unit 3212 may receive the electronic data S4 which are sifted out by the control unit 3124. Moreover, the entire of the sifted electronic data S4 from the micro processing unit 3212 may be transmitted to and stored in the storage unit 3211, or the entire of the sifted electronic data S4 from the micro processing unit 3212 may be transmitted to and displayed on the terminal display 323. Since all of the electronic data S4 received by the micro processing unit 3212 are the pre-designated event data, all of the pre-designated event data may be stored in the storage unit 3211 or displayed on the terminal display 323. Moreover, the electronic data S4 stored in the storage unit 3211 may be retrieved by the micro processing unit 3212 and transmitted to and displayed the terminal display 323. It is noted that numerous modifications and alterations may be made while retaining the teachings of the invention. For example, in another embodiment, the terminal display is also connected with the storage unit of the service data record system, so that the electronic data stored in the storage unit can be directly displayed on the terminal display.

In other words, the data flow of each pre-designated event data stored in the storage unit 3211 is started from the corresponding hardware component, then transmitted to the control unit 3124, then transmitted to the micro processing unit 3212 through the first control connection part 31241 and the first micro processing unit connection part 32121 sequentially, and finally transmitted to the storage unit 3211 through the second micro processing unit connection part 32122 and the first storage connection part 32111 sequentially.

Furthermore, in this embodiment, the micro processing unit 3212 of the service data record system 32B may receive the power device data S322 (e.g. the information about the accumulated use frequency or the dump energy) from the power device 322 and the terminal display data S323 (e.g. the information about a use frequency and the accumulated power-on time period of the terminal display 323) from the terminal display 323. Consequently, the power device data S322 and the terminal display data S323 are transmitted to and stored in the storage unit 3211.

As mentioned above, the service data record system 32B is equipped with the power device 322. In case that the POS device 31 is abnormal, or the POS device 31 may have a crash to result in the power unit 3122 out of work, the power device 322 of the service data record system 32B provides backup electricity to the whole service data record system 32B. Consequently, even if the POS device 31 has an unexpected crash, the pre-designated event data S4 stored in the storage unit 3211 can still be retrieved by the micro processing unit 3212 and transmitted to and displayed on the terminal display 323. That is, even if the POS device 31 has a crash, the service engineer is able to conduct the breakdown maintenance and the reliability analysis according to the contents displayed on the terminal display 323.

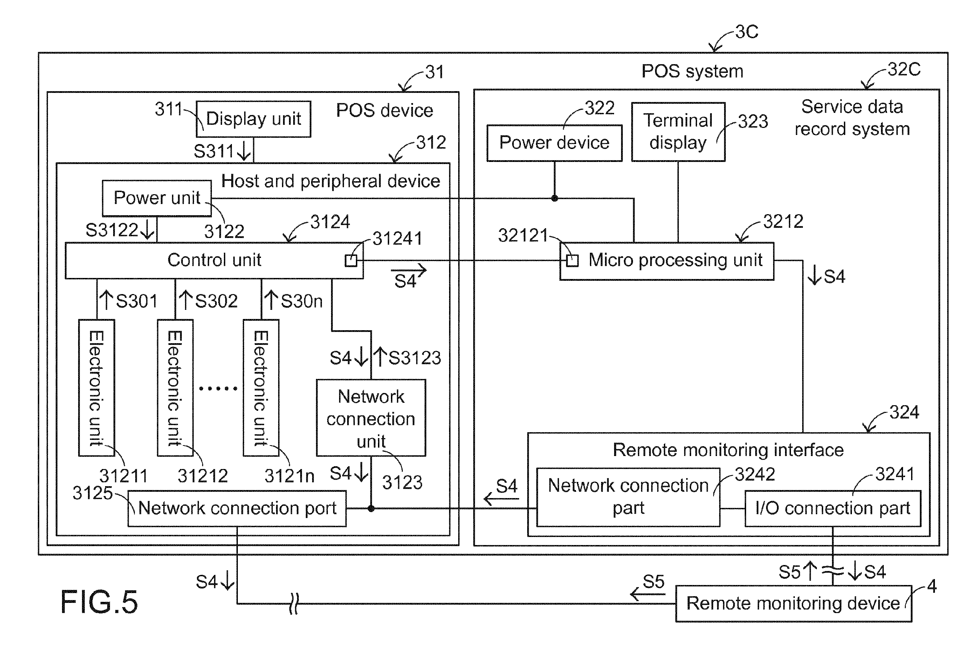

FIG. 5 is a schematic block diagram illustrating a POS system according to a third embodiment of the present invention. The components of the POS system 3C that are similar to those of first embodiment are designated by identical numeral references, and the detailed descriptions thereof are omitted. In comparison with the first embodiment, the service data record system 32C of the POS system 3C of this embodiment further comprises a remote monitoring interface 324. The remote monitoring interface 324 is connected with the micro processing unit 3212. Consequently, the electronic data S4 received by the micro processing unit 3212 may be externally transmitted to a remote monitoring device 4. Furthermore, in this embodiment, the remote monitoring interface 324 comprises plural I/O connection parts 3241 and a network connection part 3242.

In this embodiment, the control unit 3124 may firstly sift out the desired electronic data S4 from the received electronic data sets S301~S30n, S311, S3122 and S3123. Moreover, the control unit 3124 may sift out the desired electronic data S4 by judging whether the electronic date comply with the pre-designated event data. The micro processing unit 3212 may receive the electronic data S4 which are sifted out by the control unit 3124. Moreover, the entire of the sifted electronic data S4 from the micro processing unit 3212 may be transmitted to the terminal display 323, or the received electronic data S4 may be transmitted from the micro processing unit 3212 to the remote monitoring device 4 through the remote monitoring interface 324. Consequently, the service engineer at the remote side can monitor the operating status of the POS device 31 at any time. Moreover, if the POS device 31 is abnormal, the service engineer can make initial recognition and judgment according to the contents received by the remote monitoring device 4 in order to facilitate making the preparation before repair or maintenance. Moreover, according to the contents received by the remote monitoring device 4, the service engineer at the remote side may construct the terminal user how to make repair or maintenance.

Similarly, the service data record system 32C is equipped with the power device 322. In case that the POS device 31 is abnormal, or the POS device 31 may have a crash to result in the power unit 3122 out of work, the power device 322 of the service data record system 32C provides backup electricity to the whole service data record system 32C. Consequently, even if the POS device 31 has an unexpected crash, the pre-designated event data stored in the storage unit 3211 can still be retrieved by the remote monitoring device 4.

Furthermore, the service engineer at the remote side may remotely control the POS system 3C through the remote monitoring interface 324. In other words, a control command S5 from the remote monitoring device 4 may be inputted into the service data record system 32C through the remote monitoring interface 324. For example, the service engineer may set up device parameters through the remote monitoring device 4. Consequently, the control command S5 corresponding to the settings of the device parameters may be inputted into the micro processing unit 3212 through the remote monitoring interface 324. According to the control command S5, the micro processing unit 3212 executes a corresponding control process.

Moreover, an example of the I/O connection part 3241 includes but is not limited to a USB port, a COM port, an inter-integrated circuit (I²C) port, a 3G port, a 4G port, a Bluetooth port or a WiFi port.

Preferably, the network connection part 3242 of the service data record system 32C and the network connection unit 3123 of the POS device 31 are collaboratively connected to the same network connection port 3125. When the POS device 31 is in a normal working sate (e.g. in a power-on state), the electronic data S4 may be transmitted to the remote monitoring device 4 through the network connection unit 3123 of the POS device 31. Similarly, the control command S5 from the remote monitoring device 4 may be inputted into the POS system 3C through the network connection unit 3123 of the POS device 31.

In case the POS device 31 is abnormal such as the POS device 31 may have a crash, the power unit 3122 does not work or the network connection unit 3123 may have a breakdown, the micro processing unit 3212 may transmit the received electronic data S4 to the remote monitoring device 4 through the network connection part 3242 of the service data record system 32C, and the control command S5 from the remote monitoring device 4 may be inputted into the POS system 3C through the network connection part 3242 of the service data record system 32C.

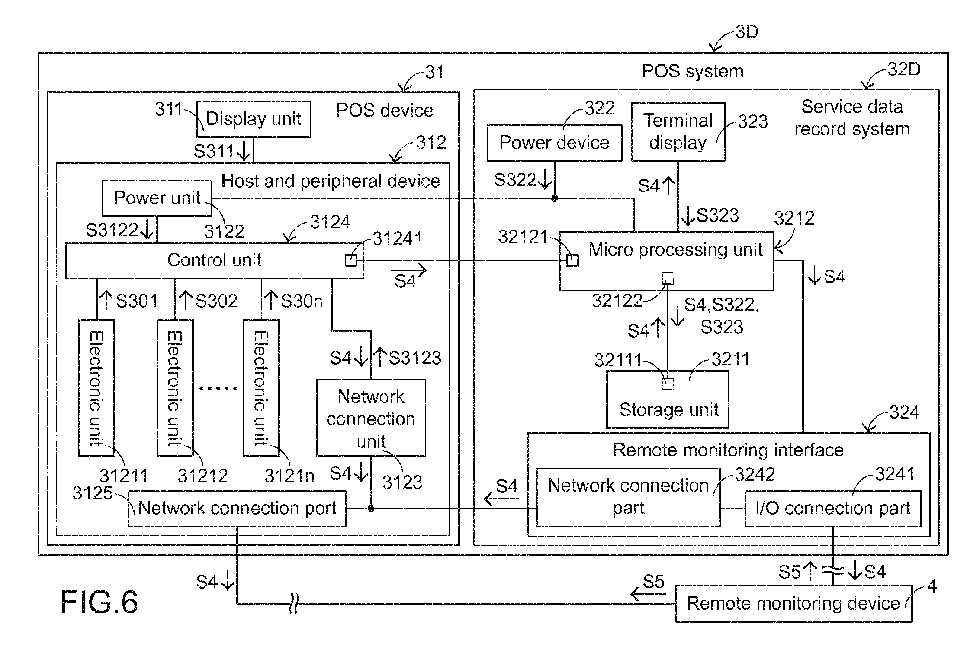

FIG. 6 is a schematic block diagram illustrating a POS system according to a fourth embodiment of the present invention. The components of the POS system 3D that are similar to those of second and third embodiment are designated by identical numeral references, and the detailed descriptions thereof are omitted. In comparison with the second and third embodiments, the service data record system 32D of the POS system 3D of this embodiment comprises both of the storage unit 3211 and the remote monitoring interface 324.

When the POS device 31 is in a normal working sate (e.g. in a power-on state), the electronic data S4 stored in the storage unit 3211 may be transmitted to the remote monitoring device 4 through the network connection unit 3123 of the POS device 31 by the micro processing unit 3212. In case the POS device 31 is abnormal such as the POS device 31 may have a crash, the power unit 3122 does not work or the network connection unit 3123 may have a breakdown, the electronic data S4 stored in the storage unit 3211 may be transmitted to remote monitoring device 4 through the network connection part 3242 of the service data record system 32D by the micro processing unit 3212.

It noted that the present invention is not limited to the above descriptions and embodiments. Those skilled in the art will readily observe that numerous modifications and alterations may be made while retaining the teachings of the invention. For example, in a variant example, the remote monitoring interface may be connected to the storage unit of the service data record system. Consequently, the electronic data stored in the storage unit may be directly received by the remote monitoring device through the remote monitoring interface.

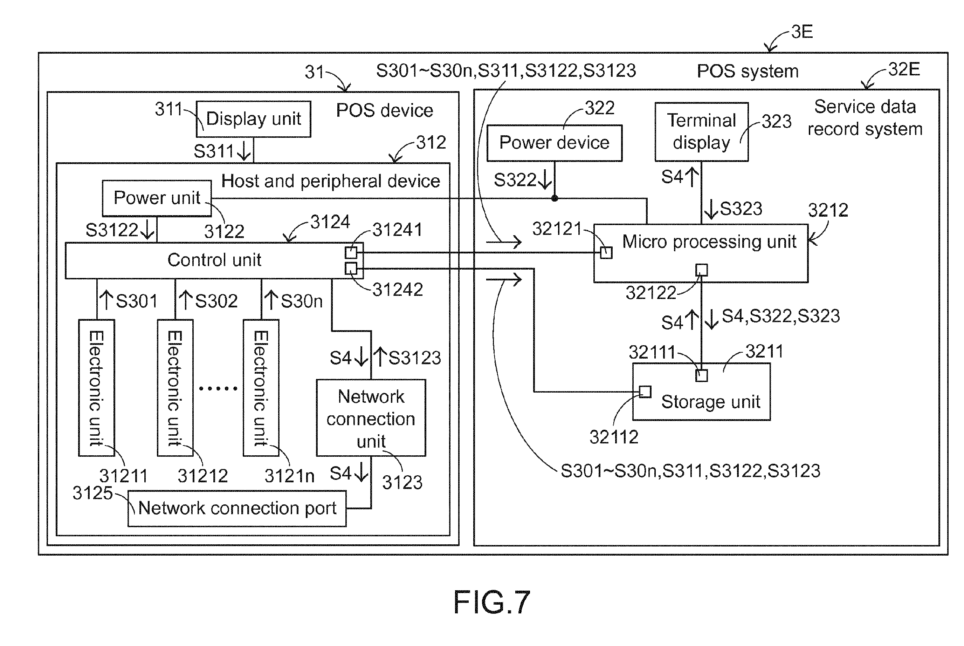

FIG. 7 is a schematic block diagram illustrating a POS system according to a fifth embodiment of the present invention. The components of the POS system 3E that are similar to those of second embodiment are designated by identical numeral references, and the detailed descriptions thereof are omitted. In comparison with the second embodiment, the control unit 3124 further has a second control connection part 31242 and the storage unit 3211 further has a second storage connection part 32112. The second storage connection part 32112 is connected to the second control connection part 31242. As mentioned in the second embodiment, the action of sifting out the electronic data sets S301~S30n, S311, S3122 and S3123 is implemented by the control unit 3124 of the POS device 31. Whereas, in this embodiment, the action of sifting out the electronic data sets S301~S30n, S311, S3122 and S3123 is implemented by the micro processing unit 3212 of the service data record system 32E.

In this embodiment, the electronic data sets S301~S30n, S311, S3122 and S3123 received by the control unit 3124 may be directly transmitted to and stored in the storage unit 3211 of the service data record system 32E, or the electronic data sets S301~S30n, S311, S3122 and S3123 received by the control unit 3124 may be transmitted to the micro processing unit 3212. Moreover, the micro processing unit 3212 may receive and sift out the electronic data sets S301~S30n, S311, S3122 and S3123 from the control unit 3124 and allow the partial data S4 of the electronic data sets S301~S30n, S311, S3122 and S3123 to be transmitted to and displayed on the terminal display 323; or the partial data S4 of the electronic data sets S301~S30n, S311, S3122 and S3123 may be transmitted to and stored in the storage unit 3211 by the micro processing unit 3212. Moreover, the micro processing unit 3212 may sift out and retrieve the electronic data sets S301~S30n, S311, S3122 and S3123 which are stored in the storage unit 3211, so that the partial data S4 of the electronic data sets S301~S30n, S311, S3122 and S3123 are transmitted to and displayed on the terminal display 323. Similarly, the micro processing unit 3212 sifts out the desired electronic data S4 by judging whether the electronic data of the electronic data sets S301~S30n, S311, S3122 and S3123 comply with the pre-designated event data.

As mentioned above, the electronic data sets S301~S30n, S311, S3122 and S3123 from the control unit 3124 are sequentially transmitted through the second control connection part 31242 and the second storage connection part 32112 and stored in the storage unit 3211. Moreover, the micro processing unit 3212 may sift out the pre-designated event data S4 from the electronic data sets S301~S30n, S311, S3122 and S3123 which are stored in the storage unit 3211. Consequently, the pre-designated event data S4 is transmitted to the micro processing unit 3212 through the first storage connection part 32111 and the micro processing unit 3212 sequentially, and the pre-designated event data S4 is further transmitted to and displayed on the terminal display 323. Alternatively, the electronic data sets S301~S30n, S311, S3122 and S3123 from the control unit 3124 are transmitted to the micro processing unit 3212 through the first control connection part 31241 and the first micro processing unit connection part 32121 sequentially, and the pre-designated event data S4 is sifted out from the received electronic data sets S301~S30n, S311, S3122 and S3123 by the micro processing unit 3212. Consequently, the pre-designated event data S4 is transmitted to and displayed on the terminal display 323.

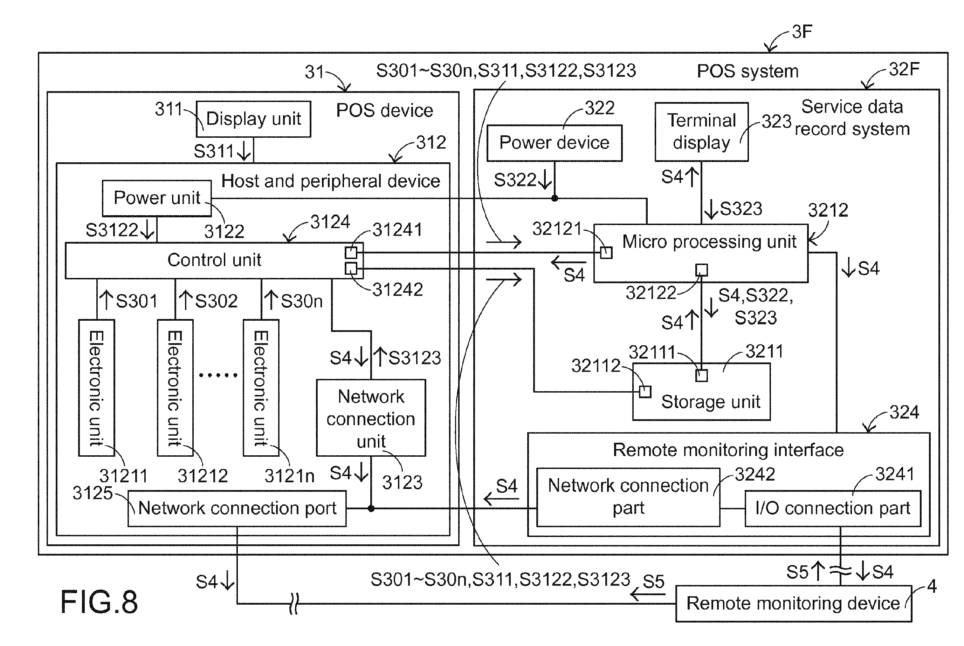

FIG. 8 is a schematic block diagram illustrating a POS system according to a sixth embodiment of the present invention. The components of the POS system 3F that are similar to those of fifth embodiment are designated by identical numeral references, and the detailed descriptions thereof are omitted. In comparison with the fifth embodiment, the service data record system 32F of the POS system 3F of this embodiment further comprises a remote monitoring interface 324. The remote monitoring interface 324 is connected with the micro processing unit 3212. Consequently, the pre-designated event data S4 sifted by the micro processing unit 3212 may be externally transmitted to the remote monitoring device 4. The working principles of the remote monitoring interface 324 are similar to those of the third embodiment, and are not redundantly described herein.

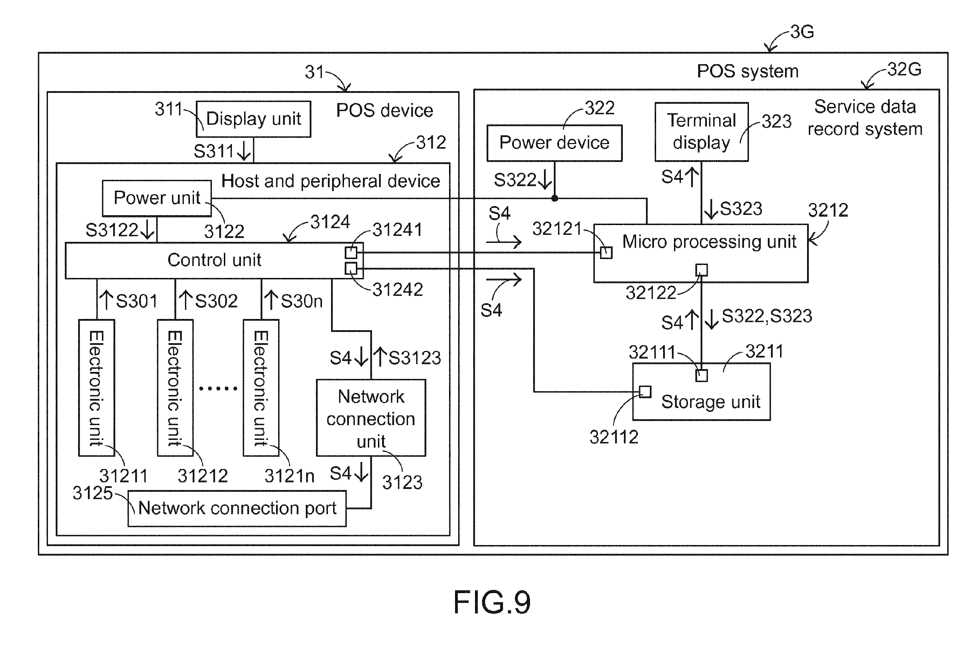

FIG. 9 is a schematic block diagram illustrating a POS system according to a seventh embodiment of the present invention. The components of the POS system 3G that are similar to those of fifth embodiment are designated by identical numeral references, and the detailed descriptions thereof are omitted. In comparison with the fifth embodiment, the action of sifting out the electronic data sets S301~S30n, S311, S3122 and S3123 is implemented by the control unit 3124 of the POS device 31. Similarly, the control unit 3124 sifts out the desired electronic data S4 by judging whether the electronic data of the electronic data sets S301~S30n, S311, S3122 and S3123 comply with the pre-designated event data.

In this embodiment, the control unit 3124 may firstly sift out the received electronic data sets S301~S30n, S311, S3122 and S3123, and allow the partial data S4 of the electronic data sets S301~S30n, S311, S3122 and S3123 to be transmitted to and stored in the storage unit 3211 of the service data record system 32G. Moreover, the sifted electronic data may be transmitted from the control unit 3124 to the micro processing unit 3212. The micro processing unit 3212 may receive the electronic data S4 from the control unit 3124 and allow the electronic data S4 to be transmitted to and displayed on the terminal display 323. Moreover, the micro processing unit 3212 may retrieve the stored electronic data S4 from the storage unit 3211 and allow the electronic data S4 to be transmitted to and displayed on the terminal display 323.

As mentioned above, the sifted electronic data S4 from the control unit 3124 are sequentially transmitted through the second control connection part 31242 and the second storage connection part 32112 and stored in the storage unit 3211. Moreover, by the micro processing unit 3212, the pre-designated event data S4 stored in the storage unit 3211 may be transmitted to the micro processing unit 3212 through the first storage connection part 32111 and the micro processing unit 3212 sequentially. Consequently, the pre-designated event data S4 is further transmitted to and displayed on the terminal display 323. Moreover, the sifted electronic data S4 from the control unit 3124 may be transmitted to the micro processing unit 3212 through the first control connection part 31241 and the first micro processing unit connection part 32121 sequentially. By the micro processing unit 3212, the pre-designated event data S4 is transmitted to and displayed on the terminal display 323.

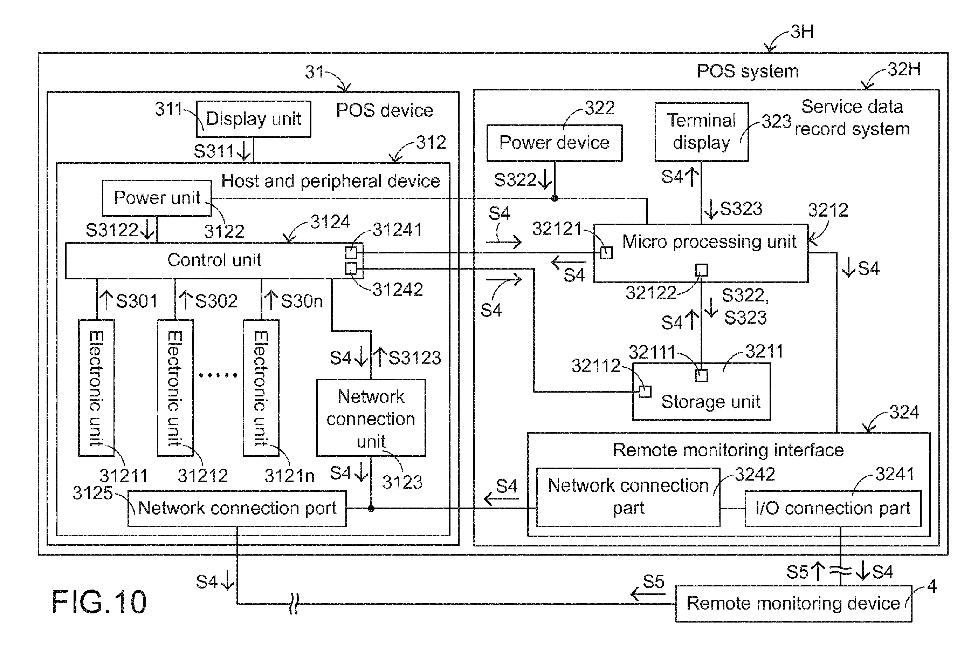

FIG. 10 is a schematic block diagram illustrating a POS system according to an eighth embodiment of the present invention. The components of the POS system 3H that are similar to those of seventh embodiment are designated by identical numeral references, and the detailed descriptions thereof are omitted. In comparison with the seventh embodiment, the service data record system 32H of the POS system 3H of this embodiment further comprises a remote monitoring interface 324. The remote monitoring interface 324 is connected with the micro processing unit 3212. Consequently, the pre-designated event data S4 received by the micro processing unit 3212 may be externally transmitted to a remote monitoring device 4. The working principles of the remote monitoring interface 324 are similar to those of the third embodiment, and are not redundantly described herein.

The descriptions illustrated supra set forth simply the preferred embodiments of the present invention; however, the characteristics of the present invention are by no means restricted thereto. All changes, alternations, or modifications conveniently considered by those skilled in the art are deemed to be encompassed within the scope of the present invention delineated by the following claims.

## Claims

1. A service data record system for use with an electronic device, the electronic device comprising at least one electronic unit and a power unit for supplying electricity to the electronic device, the service data record system comprising:
a power device;
a terminal display;
a remote monitoring interface; and
a micro processing unit electrically connected with the electronic device, the terminal display, the remote monitoring interface and the power device, and receiving the electricity from at least one of the power unit and the power device, wherein by the micro processing unit, at least a partial data of an electronic data set of the at least one electronic unit is displayed on the terminal display, and/or the at least partial data of the electronic data set is externally transmitted to a remote monitoring device, and/or a control command from the remote monitoring device is inputted into the service data record system.

2. The service data record system according to claim 1, wherein the terminal display comprises at least one selected from a group consisting of a liquid crystal module (LCM), a vacuum fluorescent display (VFD) and a light emitting device (LED) display device; and/or the power device comprises at least one selected from a group consisting of a mains power supply, a dry battery, a storage-battery, a lithium battery, a solar battery and a bio battery; and/or the electronic device is a point of sale (POS) device; and/or each of the at least partial data of the electronic data set is a pre-designated event data.

3. The service data record system according to claim 1, wherein the at least one electronic unit comprises at least one selected from a group consisting of a central processing unit, a mother board, a function board, a daughter board, a memory, a display, a hard disk, a CD-ROM, an adapter, a scanner, a thermal print device, a USB device, a power supply, a touch sensor, a magnetic stripe reader, a fingerprint recognition device, an information button (iButton), a radio frequency identification device, a card reader and an input device; and/or the at least partial data of the electronic data set contains at least one selected from a group consisting of a use frequency of the at least one electronic unit, a usage time period of the at least one electronic unit, a manufacture data of the at least one electronic unit, a firmware data of the at least one electronic unit, an unusual data of the at least one electronic unit, a repair data of the at least one electronic unit, a power-on data of the electronic device, a power-off data of the electronic device and a sleep data of the electronic device.

4. The service data record system according to claim 1,
wherein when the electronic device is in a normal working state, the power unit supplies the electricity to the service data record system, wherein when the electronic device is abnormal, the power device supplies the electricity to the service data record system; and/or
wherein the electronic device further comprises a display unit, wherein when the electronic device is in the normal working state, the at least partial data of the electronic data set is displayed on the display unit, wherein when the electronic device is abnormal, the at least partial data of the electronic data set is displayed on the terminal display.

5. The service data record system according to claim 1, wherein the electronic device further comprises a control unit, which is electrically connected with the at least one electronic unit and receives the electronic data set from the at least one electronic unit,
wherein the service data record system further comprises a storage unit, wherein the micro processing unit is electrically connected with the control unit and the storage unit, wherein the control unit sifts out the at least partial data from the electronic data set and transmits the at least partial data to the micro processing unit, wherein the micro processing unit receives the at least partial data of the electronic data set and transmits an entire of the at least partial data to the storage unit and/or the terminal display and/or the remote monitoring interface; or
wherein the electronic device further comprises a storage unit electrically connected with the control unit, and the electronic data set from the control unit is received by and stored in the storage unit, wherein the micro processing unit is electrically connected with the control unit and the storage unit, wherein the micro processing unit receives and sifts out the electronic data set from the control unit ,so that the at least partial data of the electronic data set is transmitted to the terminal display and/or the remote monitoring interface, and/or the micro processing unit sifts out the electronic data set from the storage unit, so that the at least partial data of the electronic data set is transmitted to the terminal display and/or the remote monitoring interface; or
wherein the electronic device further comprises a storage unit electrically connected with the control unit, wherein the control unit sifts out the at least partial data from the electronic data set and allows the at least partial data to be transmitted to and stored in the storage unit, and/or the control unit transmits the at least partial data of the electronic data set to the micro processing unit, wherein the micro processing unit receives the at least partial data from the control unit, so that the entire of the at least partial data is transmitted to the terminal display and/or the remote monitoring interface, and/or the micro processing unit retrieves the at least partial data from the storage unit, so that the entire of the at least partial data of the electronic data set is transmitted to the terminal display and/or the remote monitoring interface.

6. The service data record system according to claim 5, wherein the control unit is an embedded controller; and/or the storage unit is an electrically erasable programmable read-only memory (EEPROM); or
wherein the micro processing unit allows a power device data of the power device to be transmitted to and stored in the storage unit; and/or the terminal display is connected with the micro processing unit, and the micro processing unit allows a terminal display data of the terminal display to be transmitted to and stored in the storage unit.

7. The service data record system according to claim 1, wherein the remote monitoring interface comprises at least one I/O connection part and/or a network connection part, the at least one I/O connection part comprises at least one selected from a group consisting of a USB port, a COM port, an inter-integrated circuit (I²C) port, a 3G port, a 4G port, a Bluetooth port and a WiFi port; and/or
wherein the remote monitoring interface comprises at least one I/O connection part and/or a network connection part, the electronic device further has a network connection unit, wherein when the electronic device is in a normal working state, the at least partial data of the electronic data set is externally transmitted to the remote monitoring device through the network connection unit, and/or the control command from the remote monitoring device is inputted into the service data record system through the network connection unit, wherein when the electronic device is abnormal, the at least partial data of the electronic data set is externally transmitted to the remote monitoring device through the network connection part, and/or the control command from the remote monitoring device is inputted into the service data record system through the network connection part.

8. A POS system with a service data record system, the POS system comprising:
a display unit, wherein a merchandise information is displayed on the display unit;
a host and peripheral device comprising at least one electronic unit and a power unit, wherein the power unit supplies electricity to the host and peripheral device; and
the service data record system comprising a power device, a terminal display, a remote monitoring interface and a micro processing unit, wherein the micro processing unit is electrically connected with the power device, the terminal display, the remote monitoring interface and the host and peripheral device, and receives the electricity from at least one of the power unit and the power device, wherein by the micro processing unit, at least a partial data of an electronic data set of the at least one electronic unit is displayed on the terminal display, and/or the at least partial data of the electronic data set is externally transmitted to a remote monitoring device, and/or a control command from the remote monitoring device is inputted into the service data record system.

9. The POS system according to claim 8, wherein the terminal display comprises at least one selected from a group consisting of a liquid crystal module (LCM), a vacuum fluorescent display (VFD) and a light emitting device (LED) display device; and/or the power device comprises at least one selected from a group consisting of a mains power supply, a dry battery, a storage-battery, a lithium battery, a solar battery and a bio battery; and/or each of the at least partial data of the electronic data set is a pre-designated event data.

10. The POS system according to claim 8, wherein the at least one electronic unit comprises at least one selected from a group consisting of a central processing unit, a mother board, a function board, a daughter board, a memory, a display, a hard disk, a CD-ROM, an adapter, a scanner, a thermal print device, a USB device, a power supply, a touch sensor, a magnetic stripe reader, a fingerprint recognition device, an information button (iButton), a radio frequency identification device, a card reader and an input device; and/or the at least partial data of the electronic data set contains at least one selected from a group consisting of a use frequency of the at least one electronic unit, a usage time period of the at least one electronic unit, a manufacture data of the at least one electronic unit, a firmware data of the at least one electronic unit, an unusual data of the at least one electronic unit, a repair data of the at least one electronic unit, a power-on data of the host and peripheral device, a power-off data of the host and peripheral device and a sleep data of the host and peripheral device.

11. The POS system according to claim 8, wherein
wherein when the host and peripheral device is in a normal working state, the power unit supplies the electricity to the service data record system, wherein when the host and peripheral device is abnormal, the power device supplies the electricity to the service data record system; and/or
wherein when the host and peripheral device is in the normal working state, the at least partial data of the electronic data set is displayed on the display unit, wherein when the host and peripheral device is abnormal, the at least partial data of the electronic data set is displayed on the terminal display.

12. The POS system according to claim 8, wherein the host and peripheral device further comprises a control unit, which is electrically connected with the at least one electronic unit and the display unit and receives the electronic data set from at least one of the electronic unit and the display unit,
wherein the service data record system further comprises a storage unit, wherein the micro processing unit is electrically connected with the control unit and the storage unit, wherein the control unit sifts out the at least partial data from the electronic data set and transmits the at least partial data to the micro processing unit, wherein the micro processing unit receives the at least partial data of the electronic data set and transmits an entire of the at least partial data to the storage unit and/or the terminal display and/or the remote monitoring interface; or
wherein the service data record system further comprises a storage unit electrically connected with the control unit, and the electronic data set from the control unit is received by and stored in the storage unit, wherein the micro processing unit is electrically connected with the control unit and the storage unit, wherein the micro processing unit receives and sifts out the electronic data set from the control unit, so that the at least partial data of the electronic data set is transmitted to the terminal display and/or the remote monitoring interface, and/or the micro processing unit sifts out the electronic data set from the storage unit, so that the at least partial data of the electronic data set is transmitted to the terminal display and/or the remote monitoring interface; or
wherein the service data record system further comprises a storage unit electrically connected with the control unit, wherein the control unit sifts out the at least partial data from the electronic data set and allows the at least partial data to be transmitted to and stored in the storage unit, and/or the control unit transmits the at least partial data of the electronic data set to the micro processing unit, wherein the micro processing unit receives the at least partial data from the control unit, so that the entire of the at least partial data is transmitted to the terminal display and/or the remote monitoring interface, and/or the micro processing unit retrieves the at least partial data from the storage unit, so that the entire of at least partial data of the electronic data set is transmitted to the terminal display and/or the remote monitoring interface.

13. The POS system according to claim 12, wherein the control unit is an embedded controller; and/or the storage unit is an electrically erasable programmable read-only memory (EEPROM), or
wherein the micro processing unit allows a power device data of the power device to be transmitted to and stored in the storage unit; and/or the terminal display is connected with the micro processing unit, and the micro processing unit allows a terminal display data of the terminal display to be transmitted to and stored in the storage unit.

14. The POS system according to claim 8, wherein the remote monitoring interface comprises at least one I/O connection part and/or a network connection part, the at least one I/O connection part comprises at least one selected from a group consisting of a USB port, a COM port, an inter-integrated circuit (I²C) port, a 3G port, a 4G port, a Bluetooth port and a WiFi port; and/or
wherein the remote monitoring interface comprises at least one I/O connection part and/or a network connection part, the host and peripheral device further has a network connection unit, wherein when the host and peripheral device is in a normal working state, the at least partial data of the electronic data set is externally transmitted to the remote monitoring device through the network connection unit, and/or the control command from the remote monitoring device is inputted into the service data record system through the network connection unit, wherein when the host and peripheral device is abnormal, the at least partial data of the electronic data set is externally transmitted to the remote monitoring device through the network connection part, and/or the control command from the remote monitoring device is inputted into the service data record system through the network connection part.
